# EUROPÄISCHE PATENTSCHRIFT

(11) **EP 1 296 859 B1**
(45) Veröffentlichungstag und Bekanntmachung des Hinweises auf die Patenterteilung: **16.11.2005**
(21) Anmeldenummer: 01944963.6
(22) Anmeldetag: 31.05.2001
(51) Int. Cl.: B60R 21/34

(54) **VERFAHREN UND VORRICHTUNG ZUM ERKENNEN EINES FUSSGANGERAUFPRALLS**
METHOD AND DEVICE FOR RECOGNITION OF A COLLISION WITH A PEDESTRIAN
PROCEDE ET DISPOSITIF POUR IDENTIFIER UN IMPACT DU A UN PIETON

(30) Priorität: 21.06.2000 DE 10030465
(43) Veröffentlichungstag der Anmeldung: 02.04.2003
(73) Patentinhaber: ROBERT BOSCH GMBH, 70442 Stuttgart (DE)
(72) Erfinder: MATTES, Bernhard, 74343 Sachsenheim (DE); FLIK, Gottfried, 71229 Leonberg (DE)
(86) Internationale Anmeldenummer: PCT/DE2001/002062
(87) Internationale Veröffentlichungsnummer: WO 2001/098117

(56) Entgegenhaltungen:
- WO-A-97/18108
- DE-A- 2 821 156
- PATENT ABSTRACTS OF JAPAN vol. 2000, no. 02, 29. Februar 2000 (2000-02-29) -& JP 11 310095 A (TOYOTA CENTRAL RES &DEV LAB INC), 9. November 1999 (1999-11-09)
- PATENT ABSTRACTS OF JAPAN vol. 1996, no. 12, 26. Dezember 1996 (1996-12-26) -& JP 08 216826 A (TOYOTA MOTOR CORP), 27. August 1996 (1996-08-27)
- PATENT ABSTRACTS OF JAPAN vol. 2000, no. 04, 31. August 2000 (2000-08-31) -& JP 2000 025562 A (TOYOTA CENTRAL RES &DEV LAB INC), 25. Januar 2000 (2000-01-25)

## Beschreibung

### Stand der Technik

Die vorliegende Erfindung betrifft ein Verfahren und eine Vorrichtung zum Erkennen des Aufpralls eines Fußgängers auf ein Fahrzeug, wobei mittels mindestens eines Sensors an der Stoßstange und mindestens eines Sensors im Bereich der vorderen Kante der Motorhaube die durch einen Aufprall verursachten Drücke oder Verformungen gemessen und aus den Sensorausgangssignalen durch Vergleich mit Referenzgrößen ein erstes Kriterium für die Entscheidung, ob ein Fußgängeraufprall vorliegt, gebildet wird.

Ein solches Verfahren zum Erkennen eines Fußgängeraufpralls auf ein Personenkraftfahrzeug ist z. B. aus der WO 97/18108 bekannt. Um bei einem Aufprall eines Fußgängers auf die Frontseite eines Fahrzeugs den Fußgänger gegen schwere Verletzungen zu schützen, ist es aus dem Stand der Technik bekannt, auf der Motorhaube oder an der Windschutzscheibe ein oder mehrere Airbags vorzusehen, welche beim Aufprall des Fußgängers ausgelöst werden. Eine andere bekannte Schutzmaßnahmen bei einem Fußgängeraufprall besteht darin, daß die Motorhaube schräg angestellt wird, um den Fußgänger aufzufangen. Die Auslösung der genannten Schutzeinrichtungen wird davon abhängig gemacht, dass der Aufprall eines Fußgängers sicher erkannt wird und von Aufprallen anderer Objekte eindeutig unterschieden werden kann. Gemäß dem genannten Stand der Technik wird für die Erkennung eines Fußgängeraufpralls die prinzipielle Kinematik des Fußgängers bei einem Aufprall auf die Vorderseite eines Personenkraftwagens ausgenutzt. In aller Regel ist nämlich die erste Kontaktstelle eines Fußgängers beim Aufprall auf ein Fahrzeug die Stoßstange. Deshalb befindet sich ein erster Sensor, der auf Krafteinwirkung oder Verformung reagiert, an der Stoßstange des Fahrzeugs. Durch den Kontakt mit der Stoßstange erhält der Fußgänger einen Rotationsimpuls, der ihn auf die Motorhaube schleudert. Es wird also nach dem Aufprall auf die Stoßstange zeitlich versetzt ein weiterer Aufprall auf die Motorhaube folgen. Deshalb befindet sich an der Vorderkante der Motorhaube ein zweiter auf Druck oder Verformung reagierender Sensor. Die Sensorausgangssignale werden mit Referenzgrößen verglichen, welche repräsentativ für Fußgängeraufpralle sind. Bei einer Übereinstimmung, bzw. einer innerhalb einer gewissen Toleranzgrenze liegenden Übereinstimmung, der Sensorausgangssignale mit den Referenzgrößen wird für einen Fußgängeraufprall entschieden. Folge dieser Entscheidung ist dann ein Auslösen der vorhandenen Schutzeinrichtungen.

Der Erfindung liegt die Aufgabe zugrunde, ein Verfahren bzw. eine Vorrichtung der eingangs genannten Art anzugeben, womit bei einem Aufprall auf die Frontseite eines Fahrzeugs mit möglichst hoher Zuverlässigkeit entschieden werden kann, ob dieser Aufprall von einem Fußgänger verursacht worden ist.

### Vorteile der Erfindung

Die genannte Aufgabe wird mit den Merkmalen des Anspruchs 1 bzw. 6 dadurch gelöst, dass mittels mindestens eines Sensors an der Stoßstange und mindestens eines Sensors im Bereich der vorderen Kante der Motorhaube die durch einen Aufprall verursachten Drücke oder Verformungen gemessen und aus den Sensorausgangssignalen durch Vergleich mit Referenzgrößen ein erstes Kriterium für die Entscheidung, ob ein Fußgängeraufprall vorliegt, gebildet wird, dass die durch einen Aufprall verursachte Geschwindigkeits- und/oder Beschleunigungsänderung des Fahrzeugs ermittelt wird, dass durch Vergleich der Geschwindigkeits- und/oder Beschleunigungsänderung mit einer Referenzgröße ein zweites Kriterium für die Entscheidung, ob ein Fußgängeraufprall vorliegt, gebildet wird und dass für einen Fußgängeraufprall dann entschieden wird, wenn beide Entscheidungskriterien erfüllt sind.

Dadurch, dass neben dem ersten bekannten Entscheidungskriterium noch als weiteres Entscheidungskriterium aus der Geschwindigkeits- und/oder Beschleunigungsänderung des Fahrzeugs aufgrund eines Aufpralls gebildet wird, und die Entscheidung für einen Fußgängeraufprall von beiden Entscheidungskriterium abhängig gemacht wird, wird eine hohe Zuverlässigkeit bei der Erkennung eines tatsächlich vorliegenden Fußgängeraufpralls erzielt.

Vorteilhafte Weiterbildungen der Erfindung gehen aus den Unteransprüchen hervor.

Es ist zweckmäßig, bei der Herleitung des zweiten Entscheidungskriteriums eine vor einem Aufprall eingeleitete Bremsung zu berücksichtigen, weil diese sich auf die durch einen Aufprall verursachte Geschwindigkeits- und/oder Beschleunigungsänderung des Fahrzeugs auswirkt. Es sollte bei einer vor einem Aufprall eingeleiteten Bremsung das zweite Entscheidungskriterium allein aus der Beschleunigungsänderung hergeleitet werden, denn bei bremsblockierten Rädern liefern die im Fahrzeug vorhandenen Geschwindigkeitssensoren den Wert 0. Es kann also keine Geschwindigkeitsänderung durch Vergleich der Geschwindigkeiten vor und nach einem Aufprall ermittelt werden. Anders ist das bei einer Beschleunigungsmessung, die unabhängig von der Bewegung der Räder des Fahrzeugs geschieht.

Referenzgrößen für die Sensorausgangssignale können z. B. Signalamplituden sein, die für einen Fußgängeraufprall typisch sind. Als Referenzgröße kann auch die für einen Fußgängeraufprall typische zeitliche Signalabfolge der Sensorausgangssignale verwendet werden.

Es können Druck- bzw. Verformungssensoren mit unterschiedlichen Meßprinzipien eingesetzt werden. Dazu gehören aus Dehnungsmeßstreifen oder Piezofolien bestehende Sensoren oder Sensoren, die den anisotropen magnetoresistiven Effekt oder den Hall-Effekt ausnutzen. Oder es können Sensoren eingesetzt werden, die eine druckabhängige Lichtübertragungscharakteristik aufweisen.

### Zeichnung

Anhand eines in der Zeichnung dargestellten Ausführungsbeispiels wird nachfolgend die Erfindung näher erläutert. Es zeigen:
Figur 1 die Frontansicht eines Kraftfahrzeugs mit zwei Sensoren,
Figur 2 ein Blockschaltbild einer Vorrichtung zum Erkennen eines Fußgängeraufpralls,
Figur 3 Verläufe von Sensorausgangssignalen bei einem Fußgängeraufprall und
Figur 4 ein Ablaufdiagramm des Verfahrens zum Erkennen eines Fußgängeraufpralls.

### Beschreibung eines Ausführungsbeispiels

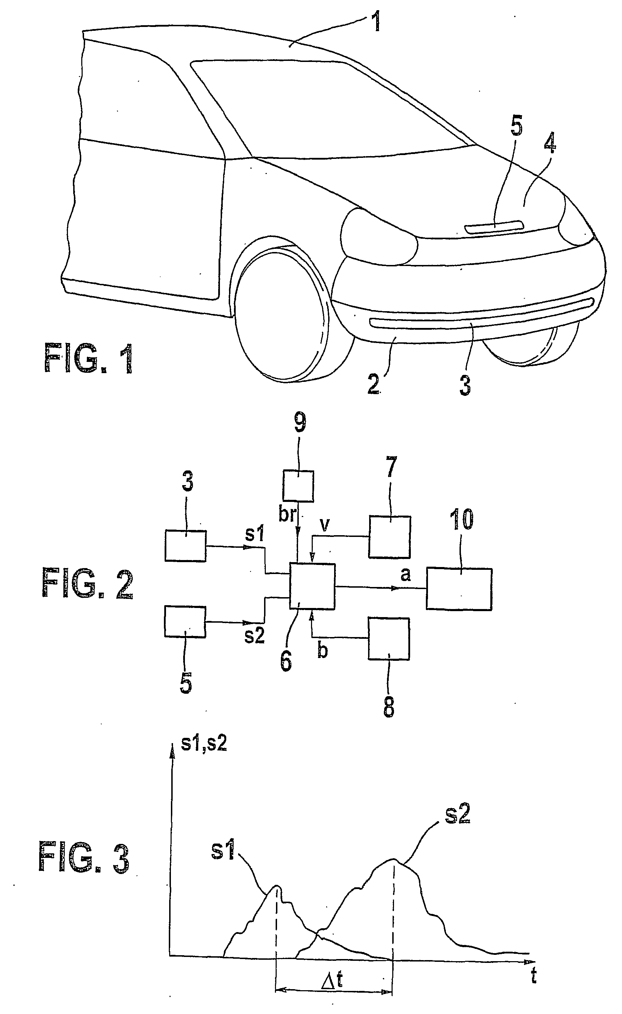

Um mit möglichst hoher Sicherheit erkennen zu können, ob es sich bei einem Aufprall auf die Frontseite eines Fahrzeugs um einen Fußgängeraufprall handelt, ist, wie in der Figur 1 dargestellt, das Fahrzeug 1 an seiner Stoßstange 2 mit einem ersten Sensor 3 und an der Vorderkante seiner Motorhaube 4 mit einem zweiten Sensor 5 versehen. Beide Sensoren 3 und 5 sind Druck- bzw. Verformungs-Sensoren. Es sind deshalb sowohl an der Stoßstange 2 als auch an der Vorderkante der Motorhaube 4 Sensoren 3, 5 angebracht, weil damit eine charakteristische Kinematik eines Fußgängeraufpralls auf das Fahrzeug 1 erfaßt werden kann. Stößt nämlich ein Fahrzeug mit seiner Frontseite auf einen Fußgänger, so berührt dieser zuerst die Stoßstange, so dass der Sensor 3 an der Stoßstange 2 ein druck- bzw. verformungsabhängiges Signal abgibt. Durch die Stoßstange 2 wird nur ein geringer Teil der gesamten kinetischen Aufprallenergie aufgenommen. Durch den Kontakt mit der Stoßstange erhält der Fußgänger nämlich einen Rotationsimpuls, der ihn auf die Motorhaube schleudert. Der zweite Sensor 5 an der Motorhaube 4 erfaßt dann diesen durch den Aufprall des Fußgängers erzeugten Druck bzw. Verformung.

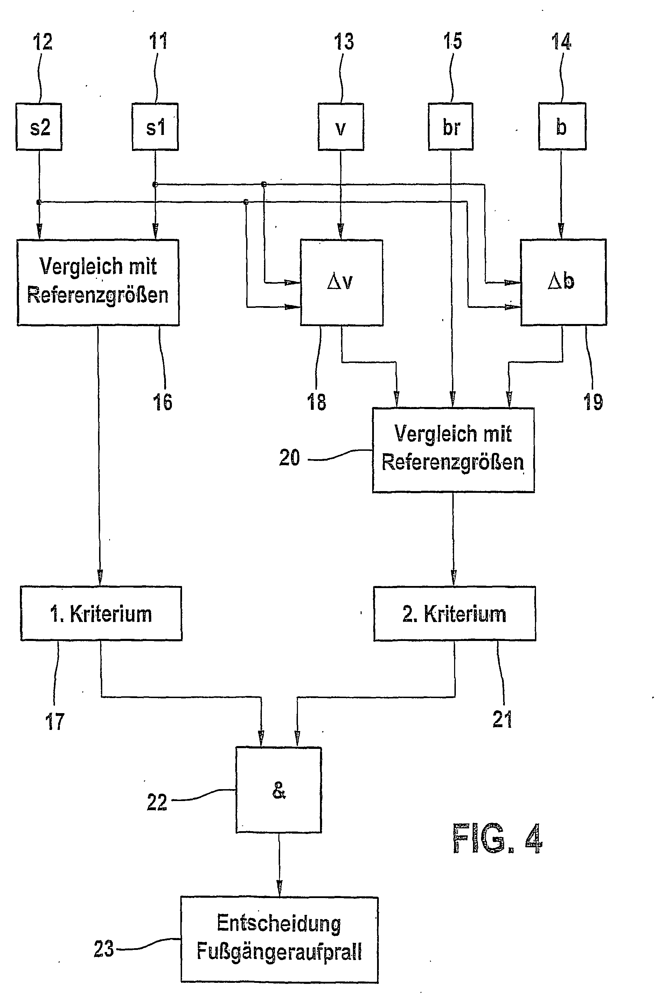

In der Figur 2 ist ein Blockschaltbild einer Vorrichtung und in der Figur 4 ein Ablaufdiagramm eines Verfahrens, mit dem ein Fußgängeraufprall mit großer Sicherheit erkannt werden kann. In der Figur 2 sind mit den Bezugszeichen 3 und 5 die an der Stoßstange und an der Motorhaube des Fahrzeugs angebrachten Druck- bzw. Verformungs-Sensoren bezeichnet.

Wenn hier von einem Sensor 3 an der Stoßstange 2 und einem Sensor 5 an der Motorhaube 4 die Rede ist, so soll damit auch eingeschlossen sein, dass sowohl an der Stoßstange 2 als auch an der Motorhaube 5 mehrere Sensoren bzw. Sensorelemente vorhanden sein können. Es können Sensoren mit verschiedenen Meßprinzipien für Druck bzw. Verformung eingesetzt werden. Die Sensoren können z. B. aus Dehnungsmeßstreifen oder piezoresistiven Folien bestehen. Es können optische Sensoren sein, die eine vom Druck abhängige Lichtdurchlässigkeit aufweisen. Ebenso können es Sensoren sein, die auf dem Halleffekt oder dem anisotropen magnetoresistiven Effekt basieren. Prinzipiell ist aber jeder Sensor geeignet, der auf irgendeine Art und Weise ein druck- bzw. verformungsabhängiges Signal erzeugt.

Die Ausgangssignale s1 und s2 der Sensoren 3 und 5 werden einem Steuergerät 6 zugeführt. Dem Steuergerät 6 ist außerdem das Ausgangssignal v eines Geschwindigkeitssensors 7, das Beschleunigungssignal b eines Beschleunigungssensors 8 und ein von der Bremsanlage 9 abgegebenes Bremssignal br zugeführt. Entscheidet die Steuereinheit 6 aufgrund der genannten Eingangssignale s1, s2, v, b, br, dass ein Aufprall auf die Frontseite des Fahrzeugs von einem Fußgänger erzeugt worden ist, so gibt die Steuereinheit 6 ein Auslösesignal a an eine Schutzvorrichtung 10 ab. Die Schutzvorrichtung 10 kann beispielsweise aus ein oder mehreren auf der Motorhaube oder am Rahmen der Windschutzscheibe angeordneten Airbags bestehen, die bei einem Fußgängeraufprall aufgeblasen werden. Auch kann zum Schutz des Fußgängers die Motorhaube 4 durch einen Federmechnanismus oder durch einen pyrotechnischen Mechanismus schräg angestellt werden, wenn die Steuereinheit 6 ein Auslösesignal a abgibt.

Wie das Verfahren zur Erkennung eines Fußgängeraufpralls abläuft, wird anhand des in der Figur 4 dargestellten Flußdiagramms beschrieben. In den Verfahrensschritten 11 und 12 werden mit den Sensoren 3 und 5 die an der Stoßstange 2 und an der Motorhaube 4 auftretenden Drücke bzw. Verformungen s1 und s2 gemessen. Außerdem werden laufend gemäß den Verfahrensschritten 13 und 14 die Geschwindigkeit v und Beschleunigung b des Fahrzeugs gemessen. Gemäß dem Verfahrensschritt 15 wird auch die Bremsaktivität br ermittelt.

Im Verfahrensschritt 16 werden die Sensorsignale s1 und s2 mit Referenzgrößen verglichen, welche charakteristisch für einen Fußgängeraufprall sind. In der Figur 3 sind Verläufe der beiden Sensorsignale s1 und s2 dargestellt, die für einen Fußgängeraufprall typisch sein können. Zuerst gibt der Sensor 3 an der Stoßstange 2 des Fahrzeugs ein Ausgangssignal s1 ab, weil bei einem Aufprall mit einem Fußgänger dieser zuerst die Stoßstange 2 berührt. Mit einem zeitlichen Versatz Δt, der für einen Fußgängeraufprall typisch ist, folgt das Ausgangssignal s2 des Sensors 5 an der Motorhaube 4. Charakteristisch für einen Fußgängeraufprall können einerseits die Amplituden der Ausgangssignale s1 und s2 der Sensoren 3 und 5 als der zeitliche Abstand Δt zwischen den beiden Ausgangssignalen s1 und s2. Diese charakteristischen Größen werden im Verfahrensschritt 16 als Referenzgrößen verwendet, mit denen die Ausgangssignale s1 und s2 der Sensoren 3 und 5 verglichen werden. Der Vergleich ist üblicherweise ein Schwellwertvergleich. Stimmen die Signale s1 und s2 exakt oder in einem gewissen Toleranzbereich mit den Referenzgrößen überein, so wird das im Verfahrensschritt 17 als erstes Kriterium dafür angesehen, dass der Aufprall durch einen Fußgänger verursacht worden ist.

Im Verfahrensschritt 18 wird die durch den Aufprall verursachte Geschwindigkeitsänderung Δv des Fahrzeugs ermittelt, indem die Differenz zwischen der Geschwindigkeit v vor dem vom Sensor 3 an der Stoßstange 2 gemessenen Aufprall s1 und der Geschwindigkeit v des Fahrzeugs nach dem vom Sensor 5 gemessenen Aufprall s2 auf die Motorhaube gebildet wird. Ebenso wird im Verfahrensschritt 19 die durch den Aufprall verursachte Beschleunigungsänderung Δb des Fahrzeugs ermittelt. Die Beschleunigungsänderung Δb ergibt sich aus der Differenz zwischen der vor dem Aufprall auf die Stoßstange gemessenen Beschleunigung und der nach dem Aufprall auf die Motorhaube gemessenen Beschleunigung. Die Beschleunigung b wird vorzugsweise mit einem Beschleunigungssensor ermittelt, der auch für die Auslösesteuerung der Rückhaltesysteme im Fahrzeug verwendet wird.

Im Verfahrensschritt 20 wird die ermittelte Geschwindigkeitsänderung Δv und auch die ermittelte Beschleunigungsänderung Δb mit jeweils einer Referenzgröße verglichen. Der Geschwindigkeitsbereich, in dem die Schutzeinrichtung für Fußgänger ausgelöst werden soll, liegt etwa im Bereich zwischen 15 und 55 km/h. Bei einem Fußgängeraufprall ändert sich die Geschwindigkeit des Fahrzeugs um ca. 5 km/h und die Beschleunigung ändert sich um etwa 3g (g ist die Erdbeschleunigung), falls vor oder während des Aufpralls keine Bremsung erfolgt, bzw. um ca. 4g, falls eine Bremsung vorgenommen wird. Um den Bremsvorgang bei der Festlegung der Referenzgrößen zu berücksichtigen, wird im Verfahrensschritt 20 die Information br über einen Bremsvorgang mit berücksichtigt.

Sollten die Geschwindigkeitsänderung Δv und die Beschleunigungsänderung Δb während des Aufpralls mit den Referenzgrößen übereinstimmen, bzw. in einem gewissen Toleranzbereich übereinstimmen, wird im Verfahrensschritt 21 ein zweites Kriterium für die Entscheidung, dass ein Fußgängeraufprall vorliegt, getroffen. Das zweite Entscheidungskriterium kann auch in Abhängigkeit entweder nur von der Geschwindigkeitsänderung Δv oder nur von der Beschleunigungsänderung Δb getroffen werden. Wird allerdings vor dem Aufprall bereits eine Bremsung vorgenommen, so kann die Geschwindigkeitsänderung Δv zur Bildung des zweiten Entscheidungskriteriums nicht herangezogen werden, da bei bremsblockierten Rädern die gemessene Fahrgeschwindigkeit den Wert 0 hat und deshalb nicht mehr für die Ermittlung einer Geschwindigkeitsdifferenz Δv herangezogen werden kann.

Im Verfahrensschritt 22 werden die beiden in den Schritten 17 und 21 ermittelten Entscheidungskriterien einer UND-Verknüpfung unterzogen, und es wird, wenn beide Entscheidungskriterien erfüllt sind, im Verfahrensschritt 23 für einen Fußgängeraufprall entschieden. Als Folge davon, werden vorhandene Fußgängerschutzeinrichtungen ausgelöst.

## Patentansprüche

1. Verfahren zum Erkennen des Aufpralls eines Fußgängers auf ein Fahrzeug, wobei mittels mindestens eines Sensors (3) an der Stoßstange (2) und mindestens eines Sensors (5) im Bereich der vorderen Kante der Motorhaube (4) die durch einen Aufprall verursachten Drücke oder Verformungen gemessen und aus den Sensorausgangssignalen (s1, s2) durch Vergleich mit Referenzgrößen ein erstes Kriterium (17) für die Entscheidung, ob ein Fußgängeraufprall vorliegt, gebildet wird, **dadurch gekennzeichnet, dass** die durch einen Aufprall verursachte Geschwindigkeits- (Δv) und/oder Beschleunigungsänderung (Δb) des Fahrzeugs (1) ermittelt wird, dass durch Vergleich der Geschwindigkeits- (Δv) und/oder Beschleunigungsänderung (Δb) mit einer Referenzgröße ein zweites Kriterium (21) für die Entscheidung, ob ein Fußgängeraufprall vorliegt, gebildet wird, und dass für einen Fußgängeraufprall entschieden wird, wenn beide Entscheidungskriterien (17, 21) erfüllt sind.

2. Verfahren nach Anspruch 1, **dadurch gekennzeichnet, dass** bei der Herleitung des zweiten Entscheidungskriteriums (21) eine vor einem Aufprall eingeleitete Bremsung (br) berücksichtigt wird.

3. Verfahren nach den Ansprüchen 1 und 2, **dadurch gekennzeichnet, dass** bei einer vor einem Aufprall eingeleiteten Bremsung (br) das zweite Entscheidungskriterium (21) allein aus der Beschleunigungsänderung (Δb) hergeleitet wird.

4. Verfahren nach Anspruch 1, **dadurch gekennzeichnet, dass** die Signalamplituden der Sensorausgangssignale (s1, s2) mit Referenzamplituden verglichen werden, die für einen Fußgängeraufprall typisch sind.

5. Verfahren nach Anspruch 1, **dadurch gekennzeichnet, dass** die zeitliche Abfolge der Ausgangssignale (s1, s2) der Sensoren (3, 5) an der Stoßstange (2) und im Bereich der vorderen Kante der Motorhaube (4) mit einer für einen Fußgängeraufprall typischen zeitlichen Signalabfolge (Δt) verglichen wird.

6. Vorrichtung zum Erkennen des Aufpralls eines Fußgängers auf ein Fahrzeug, welche zur Messung der durch einen Aufprall verursachten Drücke oder Verformungen mindestens einen Sensor (3) an der Stoßstange (2) und mindestens einen Sensor (5) im Bereich der vorderen Kante der Motorhaube (4) aufweist und welche Mittel (6) besitzt, die durch Vergleich der Sensorausgangssignale (s1, s2) mit Referenzgrößen ein erstes Kriterium (17) für die Entscheidung, ob ein Fußgängeraufprall vorliegt, bilden, **dadurch gekennzeichnet, dass** Mittel (7, 8) zur Erfassung von durch einen Aufprall verursachten Geschwindigkeits- und/oder Beschleunigungsänderungen vorhanden sind, dass Mittel (6) vorgesehen sind, die durch Vergleich der Geschwindigkeits- und/oder Beschleunigungsänderungen mit einer Referenzgröße ein zweites Kriterium (21) für die Entscheidung, ob ein Fußgängeraufprall vorliegt, bilden und dass Mittel (6) vorhanden sind, welche für einen Fußgängeraufprall entscheiden, wenn beide Entscheidungskriterien (17, 21) erfüllt sind.

7. Vorrichtung nach Anspruch 6, **dadurch gekennzeichnet, dass** die Sensoren (3, 5) aus Dehnungsmeßstreifen bestehen.

8. Vorrichtung nach Anspruch 6, **dadurch gekennzeichnet, dass** die Sensoren (3, 5) aus Piezofolien bestehen.

9. Vorrichtung nach Anspruch 6, **dadurch gekennzeichnet, dass** die Sensoren (3, 5) auf dem anisotropen magnetoresisiven Effekt basieren.

10. Vorrichtung nach Anspruch 6, **dadurch gekennzeichnet, dass** die Sensoren (3, 5) auf dem Halleffekt basieren.

11. Vorrichtung nach Anspruch 6, **dadurch gekennzeichnet, dass** die Sensoren (3, 5) aus Elementen mit druckabhängiger Lichtübertragungscharakteristik bestehen.

## Claims

1. Method for detecting a collision between a pedestrian and a vehicle, in which the pressures or deformations caused by a collision are measured by means of at least one sensor (3) on the bumper (2) and at least one sensor (5) in the region of the front edge of the engine bonnet (4), and a first criterion (17) for deciding whether a collision with a pedestrian has occurred is formed from the sensor output signals (s1, s2) by comparison with reference variables, **characterized in that** the change in speed (Δv) and/or change in acceleration (Δb) of the vehicle (1) caused by a collision is determined, **in that** a second criterion (21) for deciding whether a collision with a pedestrian has occurred is formed by comparing the change in speed (Δv) and/or change in acceleration (Δb) with a reference variable, and **in that** the decision that a collision with a pedestrian has occurred is made when the two decision criteria (17, 21) are met.

2. Method according to Claim 1, **characterized in that** a braking operation (br), which is initiated before a collision, is taken into account when deriving the second decision criterion (21).

3. Method according to Claims 1 and 2, **characterized in that** when a braking operation (br) is initiated before a collision, the second decision criterion (21) is derived solely from the change in acceleration (Δb).

4. Method according to Claim 1, **characterized in that** the signal amplitudes of the sensor output signals (s1, s2) are compared with reference amplitudes which are typical of a collision with a pedestrian.

5. Method according to Claim 1, **characterized in that** the chronological sequence of the output signals (s1, s2) of the sensors (3, 5) on the bumper (2) and in the region of the front edge of the engine bonnet (4) is compared with a chronological signal sequence (Δt) which is typical of a collision with a pedestrian.

6. Apparatus for detecting a collision between a pedestrian and a vehicle, which apparatus has at least one sensor (3) on the bumper (2) and at least one sensor (5) in the region of the front edge of the engine bonnet (4) for measuring the pressures or deformations caused by a collision, and which has means (6) which form a first criterion (17) for deciding whether a collision with a pedestrian has occurred by comparing the sensor output signals (s1, s2) with reference variables, **characterized in that** there are means (7, 8) for recording changes in speed and/or changes in acceleration caused by a collision, **in that** means (6) are provided which form a second criterion (21) for deciding whether a collision with a pedestrian has occurred by comparing the changes in speed and/or changes in acceleration with a reference variable, and **in that** there are means (6) which decide that a collision with a pedestrian has occurred when the two decision criteria (17, 21) are met.

7. Apparatus according to Claim 6, **characterized in that** the sensors (3, 5) comprise strain gauges.

8. Apparatus according to Claim 6, **characterized in that** the sensors (3, 5) comprise piezoelectric films.

9. Apparatus according to Claim 6, **characterized in that** the sensors (3, 5) are based on the anisotropic magnetoresistive effect.

10. Apparatus according to Claim 6, **characterized in that** the sensors (3, 5) are based on the Hall effect.

11. Apparatus according to Claim 6, **characterized in that** the sensors (3, 5) comprise elements with pressure-dependent light-transmission characteristics.

## Revendications

1. Procédé pour identifier un impact du à un piéton sur un véhicule, en mesurant les pressions et déformations provoquées par un impact au moyen d'au moins capteur (3) situé sur le pare-chocs (2) et d'au moins un capteur (5) situé dans la zone de l'arête avant du capot (4), avec un premier critère (17) pour décider si l'on est en présence d'un impact de piéton, formé à partir des signaux de sortie de capteurs (s1, s2) par comparaison avec des grandeurs de référence,
**caractérisé en ce qu'**
on détermine le changement de vitesse (Δv) et/ou d'accélération (Δb) du véhicule (1) provoquée par un impact, on forme un deuxième critère (21) pour décider si l'on est en présence d'un impact de piéton par comparaison du changement de vitesse (Δv) et/ou d'accélération (Δb) avec une grandeur de référence, et on conclut à un impact de piéton si les deux critères de décision (17, 21) sont remplis.

2. Procédé selon la revendication 1,
**caractérisé en ce que**
pour la déduction du deuxième critère de décision (21), un freinage (br) engagé avant un impact est pris en compte.

3. Procédé selon les revendications 1 et 2,
**caractérisé en ce qu'**
en présence d'un freinage (br) engagé avant un impact, le deuxième critère de décision (21) n'est déduit que du changement d'accélération (Δb).

4. Procédé selon la revendication 1,
**caractérisé en ce qu'**
on compare les amplitudes de signal des signaux de sortie de capteurs (s 1, s2) avec des amplitudes de référence typiques pour un impact du à un piéton.

5. Procédé selon la revendication 1,
**caractérisé en ce que**
on compare la succession temporelle des signaux de sortie (s1, s2) des capteurs (3, 5) situés sur le pare-chocs (2) et dans la zone de l'arête avant du capot (4) avec une succession temporelle de signaux (Δt) typique pour un impact du à un piéton.

6. Dispositif pour détecter un impact du à un piéton sur un véhicule, qui présente, pour mesurer les pressions ou déformations provoquées par un impact, au moins un capteur (3) situé sur le pare-chocs (2) et au moins un capteur (5) situé dans la zone de l'arête avant du capot (4), ainsi que des moyens (6) qui par comparaison des signaux de sortie de capteur (s1, s2) avec des grandeurs de référence forment un premier critère (17) pour décider si l'on est en présence d'un impact de piéton,
**caractérisé en ce qu'**
il comprend des moyens (7, 8) pour détecter des changements de vitesse et/ou d'accélération provoqués par un impact, des moyens (6) qui forment un deuxième critère (21) pour décider si l'on est en présence d'un impact du à un piéton par comparaison du changement de vitesse et/ou d'accélération avec une grandeur de référence, ainsi que des moyens (6) qui concluent à un impact dû à un piéton si les deux critères de décision (17, 21) sont remplis.

7. Dispositif selon la revendication 6,
**caractérisé en ce que**
les capteurs (3, 5) sont des bandes de mesure extensiométrique.

8. Dispositif selon la revendication 6,
**caractérisé en ce que**
les capteurs (3, 5) sont des piézofeuilles.

9. Dispositif selon la revendication 6,
**caractérisé en ce que**
les capteurs (3, 5) sont basés sur l'effet magnétorésistif anisotrope.

10. Dispositif selon la revendication 6,
**caractérisé en ce que**
les capteurs (3, 5) sont basés sur l'effet Hall.

11. Dispositif selon la revendication 6,
**caractérisé en ce que**
les capteurs (3, 5) sont des éléments avec une caractéristique de transmission de lumière en fonction de la pression.
